# FASCICULE DE BREVET EUROPEEN

(11) **EP 0 827 888 B1**
(45) Date de publication et mention de la délivrance du brevet: **30.07.2003**
(21) Numéro de dépôt: 97402061.2
(22) Date de dépôt: 04.09.1997
(51) Int. Cl.: B61D 15/06, B61G 11/14, B61F 19/04, F16F 7/08

(54) **Dispositif d'absorption d'énergie, véhicule et rame comportant un tel dispositif**
Energieaufnehmende Einrichtung, Fahrzeug und Zug mit solch einer Einrichtung
Energy absorbing device,vehicle and train with such a device

(30) Priorité: 09.09.1996 FR 9610961
(43) Date de publication de la demande: 11.03.1998
(73) Titulaire: GEC ALSTHOM TRANSPORT SA, 75116 Paris (FR); MANOIR INDUSTRIES, F-75008 Paris (FR)
(72) Inventeur: Gielczynski, Gérard, 59156 Lourches (FR); Descamps, Eric, 59750 Feignies (FR)
(74) Mandataire: Gosse, Michel

(56) Documents cités:
- DE-A- 4 330 974
- DE-C- 962 808
- FR-A- 1 599 086

## Description

La présente invention concerne l'absorption d'énergie notamment de véhicules en mouvement, en général, et porte, plus particulièrement, sur un dispositif d'absorption d'énergie ainsi que sur un véhicule et sur une rame comportant un tel dispositif.

Le document US 3 915 486 de Maeda et al. décrit une structure à absorption de l'impact d'une carrosserie de voiture automobile.

La structure à absorption d'énergie de l'art antérieur (voir p.ex. le document DE-962 808) comporte des premiers éléments susceptibles de coulisser le long d'éléments d'appui sous l'effet de l'énergie appliquée longitudinalement à la structure.

Les premiers éléments sont constitués d'un premier tube creux, les éléments d'appui étant constitués d'un second tube creux fixé au châssis de la voiture automobile.

L'absorption d'énergie selon la structure de l'art antérieur se fait par déformation plastique radiale du second tube creux sous l'action du premier tube creux.

Un inconvénient majeur de la structure à absorption d'énergie de l'art antérieur est de ne pas permettre un réglage de l'effort de fonctionnement.

Un autre inconvénient de la structure à absorption d'énergie de l'art antérieur est de ne pas combiner à la fonction d'absorption, la fonction d'anti achevalement, encore appelée fonction d'anti chevauchement.

Aussi un but de l'invention est-il un dispositif d'absorption d'énergie ainsi qu'un véhicule et une rame comportant un tel dispositif, présentant une constance de l'absorption d'énergie et ne présentant pas les inconvénients des dispositifs d'absorption d'énergie de l'art antérieur.

Un autre but de l'invention est un dispositif d'absorption d'énergie ainsi qu'un véhicule et une rame comportant un tel dispositif, permettant de moduler le niveau d'effort de fonctionement.

Conformément à l'invention, le dispositif d'absorption d'énergie comporte des premiers éléments susceptibles de coulisser le long d'éléments d'appui, ou inversement, sous l'effet de l'énergie appliquée longitudinalement audit dispositif et se caractérise en ce que lesdits premiers éléments sont des éléments de frottement et en ce que ladite énergie est absorbée par seul frottement entre lesdits premiers éléments de frottement et lesdits éléments d'appui.

Le dispositif d'absorption d'énergie de l'invention satisfait également à au moins l'une des caractéristiques suivantes:
- lesdits premiers éléments de frottement étant hors desdits éléments d'appui, des seconds éléments de frottement, susceptibles de coulisser le long desdits éléments d'appui sous l'effet de l'énergie appliquée longitudinalement audit dispositif, sont disposés à l'intérieur desdits éléments d'appui de manière à ce que ladite énergie soit absorbée par frottement entre lesdits premiers et/ou seconds éléments de frottement et lesdits éléments d'appui,
- le coefficient de frottement entre lesdits premiers éléments de frottement, voire lesdits seconds éléments de frottement, et lesdits éléments d'appui est défini par le couple de serrage d'éléments de serrage,
- lesdits premiers éléments de frottement, voire lesdits seconds éléments de frottement, sont de forme générale parallélépipèdique, cylindrique ou prismatique et lesdits éléments d'appui comportent un nombre paire de faces chacune desdites paires étant disposée de part et d'autre desdits premiers éléments de frottement, voire desdits seconds éléments de frottement,
- lesdites faces desdits éléments d'appui sont coplanaires aux faces associées desdits premiers éléments de frottement, voire aux faces associées desdits seconds éléments de frottement,
- au moins une desdites faces desdits premiers éléments de frottement, voire au moins une desdites faces desdits seconds éléments de frottement, et ladite (lesdites) face(s) associée(s) desdits éléments d'appui sont inclinées dans le sens longitudinal par rapport à l'axe longitudinal dudit dispositif,
- lesdits premiers éléments de frottement, voire lesdits seconds éléments de frottement, sont de forme générale cylindrique et lesdits éléments d'appui comportent au moins une face d'appui de forme générale concave,
- lesdites faces d'appui de forme générale concave desdits éléments d'appui sont dans le prolongement des faces de frottement associées desdits premiers éléments de frottement, voire des faces de frottement associées desdits seconds éléments de frottement,
- lesdits premiers éléments de frottement, voire lesdits seconds éléments de frottement, et lesdits éléments d'appui sont de forme générale conique ou conique à au moins un pan longitudinal,
- ladite (lesdites) face(s) de frottement desdits premiers éléments de frottement, voire ladite (lesdites) face(s) de frottement desdits seconds éléments de frottement, et ladite (lesdites) face(s) d'appui desdits éléments d'appui ont un demi angle d'ouverture α dont la valeur est comprise entre 1 et 2°,
- lesdits éléments de serrage sont tels que, lors du frottement entre lesdits premiers éléments de frottement, voire lesdits seconds éléments de frottement, et lesdits éléments d'appui, ils maintiennent en contact lesdits premiers éléments de frottement, voire lesdits seconds éléments de frottement, et lesdits éléments d'appui,
- lesdits éléments de serrage sont en phase plastique de manière à ne fonctionner qu'en régime plastique,
- lesdits éléments de serrage sont constitués de boulons et/ou de rivets et/ou de vis et/ou de goujons,
- le corps desdits boulons et/ou desdits rivets et/ou desdites vis et/ou desdits goujons comporte une section de plus faible valeur.

L'invention porte également sur un véhicule ferroviaire comportant au moins un dispositif d'absorption d'énergie selon l'invention.

L'invention porte également sur un véhicule routier comportant au moins un dispositif d'absorption d'énergie selon l'invention.

L'invention porte également sur une rame de véhicules, au moins un dispositif d'absorption d'énergie selon l'invention étant disposé entre deux desdits véhicules.

La rame de véhicules de l'invention satisfait également à l'une des caractéristiques suivantes:
- des premiers éléments de frottement sont disposés à une extrémité d'une desdites voitures et lesdits éléments d'appui sont disposés à l'extrémité associée de l'autre desdites voitures,
- des premiers éléments de frottement sont disposés aux extrémités de chacune desdites voitures et lesdits éléments d'appui sont solidaires de l'une ou l'autre desdites voitures,
- des éléments d'appui sont disposés aux extrémités de chacune desdites voitures et des premiers éléments de frottement tête-bêche sont solidaires de chacune de l'une ou l'autre desdites voitures.

Un avantage du dispositif d'absorption d'énergie de l'invention, du véhicule et de la rame comportant un tel dispositif, est de pouvoir être intégré sur du matériel existant, par exemple un véhicule ferroviaire ou routier.

Un autre avantage du dispositif d'absorption d'énergie de l'invention, du véhicule et de la rame comportant un tel dispositif, est de pouvoir combiner sur du matériel nouveau les fonctions d'absorption et d'anti achevalement.

Un autre avantage du dispositif d'absorption d'énergie de l'invention, du véhicule et de la rame comportant un tel dispositif, est une augmentation de l'énergie absorbée.

Un autre avantage du dispositif d'absorption d'énergie de l'invention, du véhicule et de la rame comportant un tel dispositif, est une diminution de la masse et du coût.

Un autre avantage du dispositif d'absorption d'énergie de l'invention, du véhicule et de la rame comportant un tel dispositif, est une intégration hors châssis du dispositif dans le matériel nouveau.

D'autres buts, caractéristiques et avantages de l'invention apparaîtront à la lecture de la description du mode de réalisation préféré du dispositif d'absorption d'énergie de l'invention, du véhicule et de la rame comportant un tel dispositif, description faite en liaison avec les dessins dans lesquels:
- les figures 1 à 3 représentent des dispositifs d'absorption d'énergie de forme générale parallélépipèdique, ou prismatique conforme à l'invention selon des modes de réalisation préférés,
- la figure 4 représente un dispositif d'absorption d'énergie de forme générale cylindrique conforme à l'invention selon un mode de réalisation préféré.

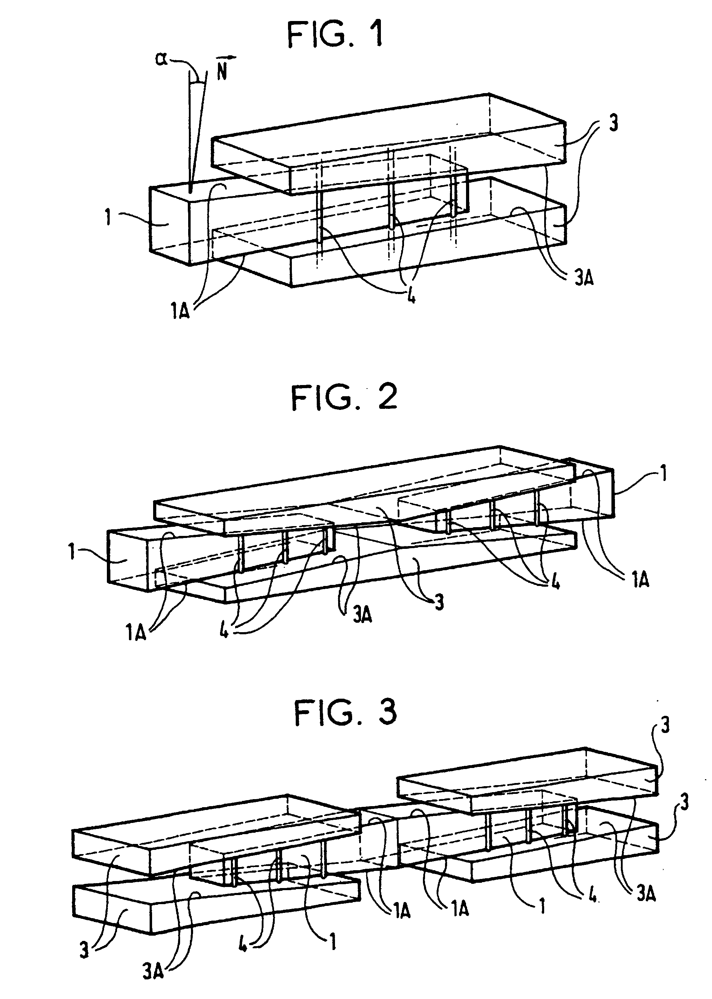

De manière générale et comme représenté aux figures 1 à 5, le dispositif d'absorption d'énergie comporte des premiers éléments 1 susceptibles de coulisser le long d'éléments d'appui 3, ou inversement, sous l'effet de l'énergie appliquée longitudinalement au dispositif.

Conformément à une caractéristique essentielle de l'invention, les premiers éléments 1 sont des éléments de frottement et l'énergie est absorbée par seul frottement entre les premiers éléments de frottement 1 et les éléments d'appui 3.

Les premiers éléments de frottement 1 étant hors des éléments d'appui 3, des seconds éléments de frottement 2 sont disposés à l'intérieur de ces éléments d'appui 3.

Les seconds éléments de frottement 2 sont susceptibles de coulisser le long des éléments d'appui 3 sous l'effet de l'énergie appliquée longitudinalement au dispositif.

Les seconds éléments de frottement 2 sont disposés à l'intérieur des éléments d'appui 3 de manière à ce que l'énergie soit absorbée par frottement entre les premiers 1 et/ou seconds 2 éléments de frottement et les éléments d'appui 3.

Le coefficient de frottement entre les premiers éléments de frottement 1 et les seconds éléments de frottement 2, lorsque ces seconds éléments existent, et les éléments d'appui 3 est défini par le couple de serrage d'éléments de serrage 4.

Les éléments de serrage 4 sont tels que, lors du frottement entre les premiers éléments de frottement 1, voire les seconds éléments de frottement 2, et les éléments d'appui 3, ils maintiennent en contact les premiers éléments de frottement 1, voire les seconds éléments de frottement 2, et les éléments d'appui 3.

Les éléments de serrage 4 sont plastifiés au serrage, en d'autres termes les éléments de serrage sont en phase plastique, de manière à ne fonctionner qu'en régime plastique lors de l'absorption d'énergie.

Un avantage d'une telle caractéristique de l'invention, est d'éliminer la partie élastique de la courbe effort-déplacement du dispositif d'absorption d'énergie.

Il résulte de ce qui précède que le couple de serrage a une influence prépondérente dans le dimensionnement des éléments de serrage.

A titre d'exemple, les éléments de serrage 4 sont constitués de boulons et/ou de rivets et/ou de vis et/ou de goujons.

Le corps des boulons et/ou des rivets et/ou des vis et/ou des goujons comporte une section de plus faible valeur.

Un avantage d'une telle caractéristique de l'invention, est de localiser et de contrôler l'allongement des éléments de serrage.

Les figures 1 à 3 représentent des dispositifs d'absorption d'énergie de forme générale parallélépipèdique ou prismatique conforme à l'invention selon des modes de réalisation préférés.

Comme représenté dans ces figures 1 à 3, lesdits premiers éléments de frottement 1, voire les seconds éléments de frottement 2, sont de forme générale parallélépipèdique ou prismatique et les éléments d'appui 3 comportent un nombre paire de faces 3A chacune des paires étant disposée de part et d'autre des premiers éléments de frottement 1, voire des seconds éléments de frottement 2.

Les faces 3A des éléments d'appui 3 sont coplanaires aux faces associées 1A des premiers éléments de frottement 1, voire aux faces associées 2A des seconds éléments de frottement 2.

Au moins une des faces 1A des premiers éléments de frottement 1, voire au moins une des faces 2A des seconds éléments de frottement 2, et la ou les face(s) associée(s) 3A des éléments d'appui 3 sont inclinées dans le sens longitudinal par rapport à l'axe longitudinal du dispositif d'absorption d'énergie.

Pour améliorer le coefficient de frottement, un film de colle peut être disposé entre les faces en contact (1A, 3A) respectivement des éléments de frottement et des éléments d'appui.

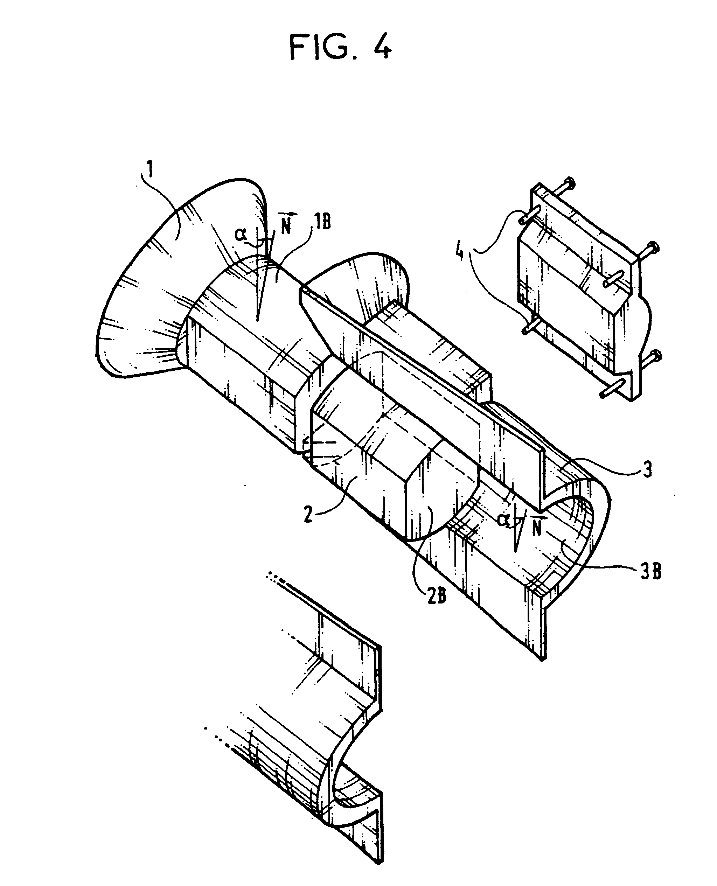

La figure 4 représente un dispositif d'absorption d'énergie de forme générale cylindrique conforme à l'invention selon un mode de réalisation préféré.

Comme représenté dans cette figure 4, les premiers éléments de frottement 1, voire les seconds éléments de frottement 2, sont de forme générale cylindrique et les éléments d'appui 3 comportent au moins une face d'appui 3B de forme générale concave.

Les faces d'appui 3B de forme générale concave des éléments d'appui 3 sont dans le prolongement des faces de frottement associées 1B des premiers éléments de frottement 1, voire des faces de frottement associées 2B des seconds éléments de frottement 2.

Les premiers éléments de frottement 1, voire les seconds éléments de frottement 2, et les éléments d'appui 3 sont de forme générale conique ou conique à au moins un pan longitudinal.

La ou les face(s) de frottement 1B des premiers éléments de frottement 1, voire la ou les face(s) de frottement 2B des seconds éléments de frottement 2, et la ou les face(s) d'appui 3B des éléments d'appui 3 ont un demi angle d'ouverture α dont la valeur est comprise entre 1 et 2°, de préférence de l'ordre de 1,5°.

Par demi angle d'ouverture, on désigne l'angle fait entre un axe perpendiculaire à l'axe longitudinal de l'élément et la normale de la face concernée de cet élément.

La présente invention porte également sur un véhicule ferroviaire comportant au moins un dispositif d'absorption d'énergie selon l'invention.

La présente invention porte également sur un véhicule routier comportant au moins un dispositif d'absorption d'énergie selon l'invention.

La présente invention porte également sur une rame de véhicules, au moins un dispositif d'absorption d'énergie selon l'invention étant disposé entre deux véhicules.

Conformément à un premier mode de réalisation préféré d'une telle rame, des premiers éléments de frottement 1 sont disposés à une extrémité d'une des voitures et les éléments d'appui 3 sont disposés à l'extrémité associée de l'autre des voitures.

Dans un tel mode de réalisation, le dispositif d'absorption d'énergie plus particulièrement concerné est celui représenté aux figures 1 ou 4.

Conformément à un autre mode de réalisation préféré d'une telle rame, des premiers éléments de frottement 1 sont disposés aux extrémités de chacune des voitures et les éléments d'appui 3 sont solidaires de l'une ou l'autre des voitures.

Dans un tel mode . de réalisation, le dispositif d'absorption d'énergie plus particulièrement concerné est celui représenté à la figure 2.

Conformément à un autre mode de réalisation préféré d'une telle rame, des éléments d'appui 3 sont disposés aux extrémités de chacune des voitures et des premiers éléments de frottement tête-bêche 1 sont solidaires de chacune de l'une ou l'autre des voitures.

Dans un tel mode de réalisation, le dispositif d'absorption d'énergie plus particulièrement concerné est celui représenté à la figure 3.

## Revendications

1. Rame de véhicules, notamment ferroviaire, muni d'au moins un dispositif d'absorption d'énergie **caractérisé en ce que** ledit dispositif d'absorption d'énergie est disposé entre deux desdits véhicules et comprend au moins des premiers éléments de frottement (1) solidaires d'un desdits véhicules, lesdits éléments de frottement étant susceptibles de coulisser le long d'éléments d'appui (3) solidaires de l'autre desdits véhicules.

2. Rame de véhicules, notamment ferroviaire selon la revendication 1, **caractérisée en ce que** ledit dispositif d'absorption comporte au moins des premiers éléments de frottement (1) disposés à une extrémité d'un desdits véhicules, lesdits éléments de frottement (1) étant susceptibles de coulisser le long d'éléments d'appui (3) disposés à l'extrémité associée de l'autre desdits véhicules.

3. Rame de véhicules selon les revendications 1 ou 2, **caractérisée en ce que** ledit dispositif d'absorption d'énergie comporte des premiers éléments de frottement (1) disposés aux extrémités de chacun desdits véhicules, lesdits éléments de frottement étant susceptibles de coulisser le long d'éléments d'appui (3) solidaires de l'un ou l'autre des véhicules.

4. Rame de véhicules selon les revendications 1 ou 2, **caractérisée en ce que** ledit dispositif d'absorption d'énergie comporte des éléments d'appui (3) qui sont disposés aux extrémités de chacun desdits véhicules et des premiers éléments de frottement tête-bêche (1) qui sont solidaires de chacun de l'un ou l'autre desdits véhicules.

5. Dispositif d'absorption d'énergie destiné à équiper une rame de véhicule selon l'une quelconque des revendications 1 à 4, comportant des premiers éléments de frottement (1) susceptibles de coulisser le long d'éléments d'appui(3), **caractérisé en ce que**, lesdits premiers éléments de frottement (1) étant hors desdits éléments d'appui (3), des seconds éléments de frottement (2), susceptibles de coulisser le long desdits éléments d'appui (3) sous l'effet de l'énergie appliquée longitudinalement audit dispositif, sont disposés à l'intérieur desdits éléments d'appui (3) de manière à ce que ladite énergie soit absorbée par frottement entre lesdits premiers (1) et/ou seconds (2) éléments de frottement et lesdits éléments d'appui (3).

6. Dispositif selon la revendication 5, dans lequel le coefficient de frottement entre lesdits premiers éléments de frottement (1), voire lesdits seconds éléments de frottement (2), et lesdits éléments d'appui (3) est défini par le couple de serrage d'éléments de serrage (4).

7. Dispositif selon l'une quelconque des revendications 5 et 6, dans lequel lesdits premiers éléments de frottement (1), voire lesdits seconds éléments de frottement (2), sont de forme générale parallélépipédique, cylindrique ou prismatique et lesdits éléments d'appui (3) comportent un nombre pair de faces (3A) chacune desdites paires étant disposée de part et d'autre desdits premiers éléments de frottement (1), voire desdits seconds éléments de frottement (2).

8. Dispositif selon la revendication 7, dans lequel lesdites faces (3A) desdits éléments d'appui (3) sont coplanaires aux faces associées (1A) desdits premiers éléments de frottement (1), voire aux faces associées (2A) desdits seconds éléments de frottement (2).

9. Dispositif selon l'une quelconque des revendications 7 et 8, dans lequel au moins une desdites faces (1A) desdits premiers éléments de frottement (1), voire au moins une desdites faces (2A) desdits seconds éléments de frottement (2), et ladite (lesdites) face(s) associée(s) (3A) desdits éléments d'appui (3) sont inclinées dans le sens longitudinal par rapport à l'axe longitudinal dudit dispositif.

10. Dispositif selon l'une des revendications 7 et 8, **caractérisé en ce qu'**un film de colle est disposé entre les faces en contact (1A, 3A) respectivement des éléments de frottement et des éléments d'appui.

11. Dispositif selon l'une quelconque des revendications 5 à 6, dans lequel lesdits premiers éléments de frottement (1), voire lesdits seconds éléments de frottement (2), sont de forme générale cylindrique et lesdits éléments d'appui (3) comportent au moins une face d'appui (3B) de forme générale concave.

12. Dispositif selon la revendication 11, dans lequel lesdites faces d'appui (3B) de forme générale concave desdits éléments d'appui (3) sont dans le prolongement des faces de frottement associées (1B) desdits premiers éléments de frottement (1), voire des faces de frottement associées (2B) desdits seconds éléments de frottement (2).

13. Dispositif selon l'une quelconque des revendications 11 et 12, dans lequel lesdits premiers éléments de frottement (1), voire lesdits seconds éléments de frottement (2), et lesdits éléments d'appui (3) sont de forme générale conique ou conique à au moins un pan longitudinal.

14. Dispositif selon l'une quelconque des revendications 9 et 13, dans lequel ladite (lesdites) face(s) de frottement (1B) desdits premiers éléments de frottement (1), voire ladite (lesdites) face(s) de frottement (2B) desdits seconds éléments de frottement (2), et ladite (lesdites) face(s) d'appui (3B) desdits éléments d'appui (3) ont un demi angle d'ouverture α dont la valeur est comprise entre 1 et 20.

15. Dispositif selon l'une quelconque des revendications 5 à 14, dans lequel lesdits éléments de serrage (4) sont tels que, lors du frottement entre lesdits premiers éléments de frottement (1), voire lesdits seconds éléments de frottement (2), et lesdits éléments d'appui (3), ils maintiennent en contact lesdits premiers éléments de frottement (1), voire lesdits seconds éléments de frottement (2), et lesdits éléments d'appui (3).

16. Dispositif selon l'une quelconque des revendications 5 à 15, dans lequel lesdits éléments de serrage (4) sont en phase plastique de manière à ne fonctionner qu'en régime plastique.

17. Dispositif selon l'une quelconque des revendications 5 à 16, dans lequel lesdits éléments de serrage (4) sont constitués de boulons et/ou de rivets et/ou de vis et/ou de goujons.

18. Dispositif selon la revendication 17, dans lequel le corps desdits boulons et/ou desdits rivets et/ou desdites vis et/ou desdits goujons comporte une section de plus faible valeur.

19. Véhicule ferroviaire comportant au moins un dispositif d'absorption d'énergie selon l'une au moins des revendications 5 à 18.

20. Véhicule routier comportant au moins un dispositif d'absorption d'énergie selon l'une au moins des revendications 5 à 18.

## Patentansprüche

1. Wagenzug, insbesondere Eisenbahnwagenzug, der mit mindestens einer Energie aufnehmenden Vorrichtung versehen ist, **dadurch gekennzeichnet, dass** die Energie aufnehmende Vorrichtung zwischen zwei der genannten Wagen angeordnet ist und mindestens erste Reibungselemente (1) aufweist, die fest mit einem dieser Wagen verbunden sind, welche Reibungselemente geeignet sind, entlang von Auflageelementen (3) zu gleiten, die fest mit dem anderen der Wagen verbunden sind.

2. Wagenzug, insbesondere Eisenbahnwagenzug, nach Anspruch 1, **dadurch gekennzeichnet, dass** die Energie aufnehmende Vorrichtung mindestens erste Reibungselemente (1) aufweist, die an einem Ende eines der Wagen angeordnet sind. welche Reibungselemente (1) geeignet sind, entlang von Auflageelementen (3) zu gleiten, die an dem angeschlossenen Ende des anderen der Wagen angeordnet sind.

3. Wagenzug nach den Ansprüchen 1 oder 2, **dadurch gekennzeichnet, dass** die Energie aufnehmende Vorrichtung erste Reibungselemente (1) aufweist, die an den Enden jedes dieser Wagen angeordnet sind, welche Reibungselemente geeignet sind, entlang von Auflageelementen (3) zu gleiten, die mit dem einen oder anderen der Wagen fest verbunden sind.

4. Wagenzug nach den Ansprüchen 1 oder 2, **dadurch gekennzeichnet, dass** die Energie aufnehmende Vorrichtung Auflageelemente (3) umfasst, die an den Enden jedes der Wagen angeordnet sind, sowie erste, umgekehrt zueinander angeordnete Reibungselemente (1), die fest mit jeweils dem einen oder anderen dieser Wagen verbunden sind.

5. Energie aufnehmende Vorrichtung, die dazu bestimmt ist, einen Wagenzug nach einem der Ansprüche 1 bis 4 auszustatten, die erste Reibungselemente (1) umfasst, die geeignet sind, entlang von Auflageelementen (3) zu gleiten, **dadurch gekennzeichnet, dass**, wenn sich die ersten Reibungselemente (1) außerhalb der Auflageelemente (3) befinden, zweite Reibungselemente (2), die geeignet sind, unter der Wirkung der auf die Vorrichtung in Längsrichtung wirkenden Energie entlang der Auflageelemente (3) zu gleiten, in den Auflageelementen (3) angeordnet sind, sodass die Energie durch Reibung zwischen den ersten (1) und/oder zweiten (2) Reibungselementen und den Auflageelementen (3) absorbiert wird.

6. Vorrichtung nach Anspruch 5, bei welcher der Reibungskoeffizient zwischen den ersten Reibungselementen (1), ja sogar den zweiten Reibungselementen (2) und den Auflageelementen (3) durch das Spannmoment von Spannelementen (4) bestimmt wird.

7. Vorrichtung nach einem der Ansprüche 5 und 6, bei der die ersten Reibungselemente (1), ja sogar die zweiten Reibungselemente (2) im Wesentlichen quaderförmig, zylindrisch oder prismatisch sind und die Auflageelemente (3) eine gerade Zahl von Seiten (3A) aufweisen, wobei diese Paare jeweils beidseits der ersten Reibungselemente (1), ja sogar der zweiten Reibungselemente (2) angeordnet sind.

8. Vorrichtung nach Anspruch 7, bei der die Seiten (3A) der Auflageelemente (3) koplanar zu den entsprechenden Seiten (1A) der ersten Reibungselemente (1), ja sogar zu den entsprechenden Seiten (2A) der genannten zweiten Reibungselemente (2) sind.

9. Vorrichtung nach einem der Ansprüche 7 und 8, bei der mindestens eine der Seiten (1A) der ersten Reibungselemente (1), ja sogar mindestens eine der Seiten (2A) der zweiten Reibungselemente (2) und die zugehörige(n) Seite(n) (3A) der Auflageelemente (3) bezüglich der Längsachse der Vorrichtung in Längsrichtung geneigt sind.

10. Vorrichtung nach einem der Ansprüche 7 und 8, **dadurch gekennzeichnet, dass** zwischen den miteinander in Berührung stehenden Seiten (1A, 3A) jeweils der Reibungselemente und der Auflageelemente ein Klebstofffilm vorgesehen ist.

11. Vorrichtung nach einem der Ansprüche 5 bis 6, bei der die ersten Reibungselemente (1), ja sogar die zweiten Reibungselemente (2) eine im Wesentlichen zylindrische Form haben und die Auflageelemente (3) mindestens eine Auflageseite (3B) von im Wesentlichen konkaver Form umfassen.

12. Vorrichtung nach Anspruch 11, bei der die im Wesentlichen konkav geformten Auflageseiten (3B) der Auflageelemente (3) in Verlängerung der entsprechenden Seiten (1B) der ersten Reibungselemente (1), ja sogar zu den entsprechenden Seiten (2B) der zweiten Reibungselemente (2) angeordnet sind.

13. Vorrichtung nach einem der Ansprüche 1 und 12, bei der die ersten Reibungselemente (1), ja sogar die zweiten Reibungselemente (2) und die Auflageelemente (3) eine im Wesentlichen konische Form oder eine konische Form mit mindestens einer Längsseitenfläche haben.

14. Vorrichtung nach einem der Ansprüche 9 und 13, bei der die Reibungsseite(n) (1B) der ersten Reibungselemente (1), ja sogar die Reibungsseite(n) (2B) der zweiten Reibungselemente (2) und die Auflagefläche(n) (3B) der Auflageelemente (3) einen Öffnungshalbwinkel α mit einem Wert von 1 bis 20 haben.

15. Vorrichtung nach einem der Ansprüche 5 bis 14, bei der die Spannelemente (4) so vorgesehen sind, dass sie bei der Reibung zwischen den ersten Reibungselementen (1), ja sogar den zweiten Reibungselementen (2) und den Auflageelementen (3) die genannten ersten Reibungselemente (1), ja sogar die zweiten Reibungselemente (2) und die Auflageelemente (3) miteinander in Berührung halten.

16. Vorrichtung nach einem der Ansprüche 5 bis 15, bei der die Spannelemente (4) in verformbarer Phase sind, sodass sie nur im verformbaren Betrieb funktioneren.

17. Vorrichtung nach einem der Ansprüche 5 bis 16, bei der die Spannelemente (4) von Bolzen und/oder Nieten und/oder Schrauben und/oder Schraubenbolzen gebildet werden.

18. Vorrichtung nach Anspruch 17, bei welcher der Schaft der Bolzen und/oder Nieten und/oder Schrauben und/oder Schraubenbolzen einen Abschnitt mit geringerem Querschnitt aufweist.

19. Eisenbahnwagen mit mindestens einer Energie aufnehmenden Vorrichtung nach mindestens einem der Ansprüche 5 bis 18.

20. Straßenfahrzeug mit mindestens einer Energie aufnehmenden Vorrichtung nach mindestens einem der Ansprüche 5 bis 18.

## Claims

1. A train of vehicles, in particular rail vehicles, provided with at least one energy absorbing device, **characterized in that** said energy absorbing device is disposed between two of said vehicles and includes first friction members (1) attached to one of said vehicles and adapted to slide along bearing members (3) attached to the other of said vehicles.

2. A train of vehicles, in particular rail vehicles, according to claim 1, **characterized in that** said absorption device includes first friction members (1) disposed at one end of one of said vehicles and adapted to slide along bearing members (3) disposed at the associated end of the other of said vehicles.

3. A train of vehicles according to claim 1 or claim 2, **characterized in that** said energy absorbing device includes first friction members (1) disposed at the ends of each of said vehicles and adapted to slide along bearing members (3) attached to one or the other of the vehicles.

4. A train of vehicles according to claim 1 or claim 2, **characterized in that** said energy absorbing device includes bearing members (3) disposed at the ends of each of said vehicles and head-to-tail first friction members (1) attached to each of one or the other of said vehicles.

5. An energy absorbing device adapted to be fitted to a train of vehicles according to any of claims 1 to 4, including first friction members (1) adapted to slide along bearing members (3) and **characterized in that**, said first friction members (1) being outside said bearing members (3), second friction members (2), adapted to slide along said bearing members (3) when energy is applied longitudinally to said device, are disposed inside said bearing members (3) so that said energy is absorbed by friction between said first friction members (1) and/or said second friction members (2) and said bearing members (3).

6. A device according to claim 5, wherein the coefficient of friction between said first friction members (1) and said second friction members (2), when present, and said bearing members (3) is defined by the clamping torque of clamping members (4).

7. A device according to either claim 5 or claim 6, wherein said first friction members (1) and said second friction members (2), when present, are generally parallelepiped-shaped, cylindrical or prism-shaped and said bearing members (3) have an even number of faces (3A), each of said pairs being disposed on respective opposite sides of said first friction members (1) and said second friction members (2), when present.

8. A device according to claim 7, wherein said faces (3A) of said bearing members (3) are coplanar with associated faces (1A) of said first friction members (1) and associated faces (2A) of said friction members (2), when present.

9. A device according to either claim 7 or claim 8, wherein at least one of said faces (1A) of said first friction members (1) and at least one of said faces (2A) of said second friction members (2), when present, and said associated face(s) (3A) of said bearing members (3) are inclined longitudinally to the longitudinal axis of said device.

10. A device according to either claim 7 or claim 8, **characterized in that** a film of glue is disposed between the respective faces in contact (1A, 3A) of the friction members and the bearing members.

11. A device according to either claim 5 or claim 6, wherein said first friction members (1) and said second friction members (2), when present, are generally cylindrical and said bearing members (3) have at least one generally concave bearing face (3B).

12. A device according to claim 11, wherein said generally concave bearing faces (3B) of said bearing members (3) are in alignment with associated friction faces (1B) of said first friction members (1) and associated friction faces (2B) of said second friction members (2), when present.

13. A device according to either claim 11 or claim 12, wherein said first friction members (1) and said second friction members (2), when present, and said bearing members (3) are generally conical or conical with at least one longitudinal flat.

14. A device according to either claim 9 or claim 13, wherein said friction face(s) (1B) of said first friction members (1) and said friction face(s) (2B) of said second friction members (2), when present, and said bearing face(s) (3B) of said bearing members (3) have an aperture half-angle α from 1 to 20 [sic].

15. A device according to any of claims 5 to 14, wherein, in the event of friction between said first friction members (1) and said second friction members (2), when present, and said bearing members (3), said clamping members (4) maintain in contact said first friction members (1) and said second friction members (2), when present, and said bearing members (3).

16. A device according to any of claims 5 to 15, wherein said clamping members (4) are in a plastic phase and operate only under plastic conditions.

17. A device according to any of claims 5 to 16, wherein said clamping members (4) comprise nuts and bolts and/or rivets and/or screws and/or pins.

18. A device according to claim 17, wherein the body of said nuts and bolts and/or said rivets and/or said screws and/or said pins has a smaller section.

19. A rail vehicle including at least one energy absorbing device according to at least one of claims 5 to 18.

20. A road vehicle including at least one energy absorbing device according to at least one of claims 5 to 18.
